# EUROPÄISCHE PATENTSCHRIFT

(11) **EP 4 267 512 B1**
(45) Veröffentlichungstag und Bekanntmachung des Hinweises auf die Patenterteilung: **01.05.2024**
(21) Anmeldenummer: 23700965.9
(22) Anmeldetag: 13.01.2023
(51) Int. Cl.: B67D 1/00, B01F 21/20, E03C 1/02

(54) **HAUSHALTSGERÄT ZUM AUSGEBEN VON TRINKWASSER**
DOMESTIC APPLIANCE FOR DISPENSING DRINKING WATER
APPAREIL MÉNAGER DESTINÉ À DISTRIBUER DE L'EAU POTABLE

(30) Priorität: 18.01.2022 DE 202022100249 U
(43) Veröffentlichungstag der Anmeldung: 01.11.2023
(60) Teilanmeldung: 24164166.1
(73) Patentinhaber: Buse KSW GmbH & Co. KG, 53557 Bad Hönningen (DE)
(72) Erfinder: TAHA, Max, 42655 Solingen (DE)
(74) Vertreter: König Szynka Tilmann von Renesse Patentanwälte Partnerschaft mbB München
(86) Internationale Anmeldenummer: PCT/EP2023/050738
(87) Internationale Veröffentlichungsnummer: WO 2023/138994

(56) Entgegenhaltungen:
- WO-A1-2020/236666
- WO-A2-2009/001061
- US-A- 4 181 243

## Beschreibung

Die vorliegende Erfindung betrifft ein Haushaltsgerät zum Ausgeben von mit einem Gas angereichertem Trinkwasser.

Die Anreicherung kann insbesondere eine Karbonisierung sein, bei welcher dem Wasser Kohlenstoffdioxid (CO₂) zugesetzt wird. Bei hierfür bekannten Haushaltsgeräten erfolgt die Karbonisierung unter vergleichsweise hohem Druck, wird das Wasser nämlich in eine Flasche gegeben, die dann mit dem CO₂ beaufschlagt wird. Ungeachtet dessen, dass mit diesem Einpressen mitunter nur anteilig CO₂ ins Wasser eingebracht wird und der Rest entweicht, können sich dabei auch andere Probleme ergeben.

Aus der WO 2020/236666 A1 ist eine Wasserausgabestation bekannt, die zusätzlich zu einem Karbonator auch Mittel zur Wasserkühlung und -aufbereitung aufweist. Diese Komponenten sind gemeinsam gehäust, wobei das Gehäuse auf einem Unterschrank platziert wird, in dem die Anschlussleitung und Gasflasche untergebracht werden.

Aus der WO 2009/001061A2 ist ein Wasserkühler bekannt, der an eine Trinkwasserleitung angeschlossen wird.

Aus der US 4,181,243 A ist ein Getränkefilter bzw. -kühler bekannt, der aus einer Wasserflasche befüllt werden kann.

Der vorliegenden Erfindung liegt das technische Problem zugrunde, ein vorteilhaftes Haushaltsgerät zum Ausgeben von angereichertem Trinkwasser anzugeben.

Dies wird mit dem Haushaltsgerät nach Anspruch 1 gelöst. Bei diesem kann das angereicherte Trinkwasser an einem Auslass gezapft werden, wobei die Anreicherung dem Auslass vorgelagert im Flüssigkeitsstrom erfolgt, also die Anreicherungseinheit im Durchlauf betrieben wird ("Durchlauf-Anreicherungseinheit"). Im Vergleich zu dem eingangs geschilderten Vorgehen, bei dem der gesamte Flascheninhalt karbonisiert wird, kann damit bspw. die für den unmittelbaren Verbrauch benötigte Wassermenge bereitgestellt werden. Zusätzlich zu einer CO₂- bzw. Gasersparnis, etwa in Anbetracht eines Ausgasens im Zeitverlauf, kann dies auch aus Hygienegründen von Vorteil sein. Es kann bspw. stehendem Wasser und damit einer Bakterien- bzw. Keimbildung vorgebeugt werden.

Vorteilhaft ist in dieser Hinsicht auch, dass sowohl der Auslass, über den das angereicherte Wasser gezapft wird, als auch ein der Durchlauf-Anreicherungseinheit vorgelagerter Einlass jeweils mit einem Filter ausgestattet ist. Mit der Durchlauf-Anreicherung können bereits die Wasservolumina innerhalb des Geräts reduziert werden kann, zudem lässt sich mit der Befilterung von Ein- und auch Auslass die Gefahr eines Keimeintrags in die Anreicherungseinheit und damit in das Trinkwasser weiter verringern. Die Durchlauf-Anreicherung kann das für eine Keimbildung zur Verfügung stehende Volumen verringern, die Befilterung beugt deren Initialisierung vor.

Bevorzugte Ausführungsformen sind Gegenstand der gesamten Offenbarung und insbesondere der abhängigen Ansprüche, wobei bei der Darstellung der Merkmale nicht immer im Einzelnen zwischen Vorrichtungs- und Verfahrens- bzw. Verwendungsaspekten unterschieden wird. So ist bspw. die Beschreibung eines für einen bestimmten Betrieb geeigneten Geräts auch auf ein entsprechendes Betriebsverfahren bzw. eine solche Verwendung zu lesen, und umgekehrt.

Das "Haushaltsgerät" (auch nur "Gerät") ist für den Haushaltsgebrauch vorgesehen, wobei die tatsächliche Verwendung im Allgemeinen selbstverständlich nicht auf Privathaushalte beschränkt ist. Das Gerät kann bspw. auch in Gemeinschaftsküchen von Büros und Vereinsheimen etc. Einsatz finden. Mit Blick auf die Eignung für den Haushaltsgebrauch kann das Gasbehältnis, also typischerweise ein CO₂-Zylinder, das in der Aufnahme angeordnet wird, bspw. ein Innenvolumen von nicht mehr als 2 Liter, 1,5 Liter bzw. 1 Liter haben, wobei mögliche Untergrenzen bspw. bei mindestens 0,2 Liter, 0,3 Liter bzw. 0,4 Liter liegen können. Die Aufnahme und das Gasbehältnis sind bevorzugt gemeinsam mit der Anreicherungseinheit und ggf. weiteren Bestandteilen, wie bspw. einer Zuführpumpe etc. (siehe unten im Detail), gehäust, also im selben Gehäuse untergebracht. Unabhängig von diesen Details ist das in der Aufnahme angeordnete Gasbehältnis dann fluidisch mit der Durchlauf-Anreicherungseinheit verbunden, gelangt also bei bzw. für die Anreicherung Gas aus dem Behältnis in die Anreicherungseinheit und dort in das Wasser.

Insgesamt kann das Gerät damit einen relativ kompakten Aufbau haben und als leicht zu transportierendes Gerät ausgelegt sein, dessen Betrieb z. B. allein ein Einstecken in eine konventionelle Steckdose erfordert (keine weitergehenden Versorgungsanschlüsse etc.). In der Anwendung kann bspw. das Gerät im Gesamten auf einer gegenüber dem Boden erhöhten Abstellfläche platziert werden, etwa auf einer Küchenarbeitsplatte oder einem Tisch oder Sideboard; es ist keine aufwändige Installation erforderlich, die Inbetriebnahme kann bspw. auch durch eine Privatperson erfolgen.

Das Gerät bzw. seine Funktion wird auch unter Verweis darauf beschrieben, wie das Wasser in dem Gerät geleitet und behandelt wird. Dies soll im Allgemeinen nicht implizieren, dass zur Erfüllung des Gegenstands das Wasser auch entsprechend fließen und behandelt werden muss, sondern ist auf ein entsprechend eingerichtetes Gerät zu lesen (sowie als Offenbarung des Betriebsverfahrens/der Verwendung). Das "Eingerichtet-Sein" kann bspw. meinen, dass das Gerät mit entsprechenden Fluidleitungen (für das Wasser und bspw. auch Gas) ausgestattet ist, welche die einzelnen Bestandteile miteinander verbinden, also z. B. den Einlass mit einer Eingangsseite der Anreicherungseinheit und deren Ausgangsseite mit dem Auslass (jeweils für das Wasser). Auf die Strömung in diesen Fluidleitungen beziehen sich dann auch die Angaben "vorgelagert" und "nachgelagert". Ferner kann das "Eingerichtet-Sein" auch dahin gehen, dass das Gerät eine Steuereinheit umfasst, die bspw. eine Zuführpumpe und/oder ein Ventil bzw. Ventile ansteuert und so zur Durchführung des geschilderten Ablaufs veranlasst, etwa auf eine Betätigung durch einen Nutzer hin.

Der zweite Filter, den das angereicherte Trinkwasser am Auslass passiert, weist in bevorzugter Ausgestaltung eine Filtermembran mit einer Porengröße von höchstens 0,5 µm auf, weiter und besonders bevorzugt höchstens 0,3 µm bzw. 0,2 µm. Bevorzugt ist ein Mikromembranfilter, kann eine Untergrenze der Porengröße also bei 0,1 µm liegen. Die Filtermembran kann bevorzugt eine Hülsenform haben, insbesondere eine Hohlzylinderform, also einen Hülsen- bzw. Hohlzylinderinnenraum begrenzen und im Betrieb radial zu einer Längsachse durchströmt werden, bevorzugt von radial außen in den Innenraum. Generell kann mit der Hülsenform, etwa im Vergleich zu einer planen Geometrie (z. B. Filterscheibe), eine größere Membranfläche realisiert werden, sodass auch bei kleiner Porengröße der Durchfluss bei der Ausgabe nicht maßgeblich limitiert wird.

Mit der Befilterung des Auslasses, infolge welcher bspw. beim Zapfen das gesamte ausgegebene Wasser den zweiten Filter, insbesondere die Filtermembran durchsetzt, kann das Gerät insbesondere auch dann geschützt sein, wenn kein Wasser ausgegeben wird. Es kann, wie eingangs erläutert, einem Keimeintrag über den Auslass vorgebeugt bzw. ein solcher verhindert werden. In dieser Hinsicht kann die kleine Porengröße von Vorteil sein. Die Filtermembran kann bevorzugt aus einer Keramik vorgesehen sein.

Gemäß einer bevorzugten Ausführungsform ist der zweite Filter Teil einer Filtereinheit, die im Gesamten austauschbar ist, also herausgenommen werden und durch eine andere, aber baugleiche Filtereinheit ersetzt werden kann. Teil dieser Filtereinheit können bspw. die Filtermembran und ein Gehäuseteil sein, an dem die Filtereinheit angefasst und mit einer geringeren Verkeimungsgefahr gehandhabt werden kann. Bevorzugt weist die Filtereinheit einen Auslassschlauch auf, durch den das Wasser dem zweiten Filter nachgelagert ausgegeben wird. Dieser Auslassschlauch, der außerhalb des Filters angeordnet und damit verkeimungsträchtig ist, wird somit gemeinsam mit dem Filter ausgetauscht, was in Hygienehinsicht von Vorteil ist.

Der Auslassschlauch kann bspw. eine Länge von mindestens 2 cm, 4 cm bzw. 6 cm haben, mit möglichen Obergrenzen bei z. B. höchstens 30 cm, 25 cm bzw. 20 cm. Unabhängig von diesen Details wird der Auslassschlauch bevorzugt in einem mit dem Gerät verbauten Rohrstutzen angeordnet, bevorzugt einem sich vom Gehäuse als Zapfhahn wegerstreckenden Rohrstutzen. Der Rohrstutzen kann zumindest abschnittsweise eine gekrümmte Form haben, was bspw. beim Zapfen ergonomisch ist, für eine Reinigung aber schlecht zugänglich sein kann. Indem der Auslassschlauch der Filtereinheit, der dann gemeinsam mit Letzterer ausgetauscht wird, in der Krümmung angeordnet wird, ist gleichwohl eine hygienische Lösung möglich. Im Allgemeinen kann auch der Einlass mit einer Filtermembran, insbesondere einem Mikromembranfilter, befiltert sein. Bevorzugt ist der erste Filter jedoch als Aktivkohlefilter vorgesehen, in bevorzugter Ausgestaltung ist er Teil einer insgesamt mehrstufigen Filterkartusche. Deren Stufen werden von dem Wasser sequenziell durchströmt, wobei zusätzlich zu der Filtration auch eine Mineralisierung bzw. Aufbereitung des Wassers erfolgen kann. Die Filterkartusche ist dem Einlass zugeordnet, also der Anreicherungseinheit vorgelagert. Diese Anordnung kann, zusätzlich zum Schutz vor einem Keimeintrag, auch hinsichtlich der Gas-Anreicherung von Vorteil sein.

Die Filterkartusche kann zusätzlich bspw. folgende Stufe bzw. Stufen umfassen:
- Sand, insbesondere gereinigten Sand, zum Ausfiltern von Feststoffen; und/oder
- Korallenmaterial, insbesondere von Seekorallen, bspw. in Granulatform, zum Binden von Kalk und z. B. auch von Chlor; und/oder
- Minerale zur Mineralisierung des Wassers, z. B. mit Magnesium und/oder Calzium; und/oder
- Quarzkristalle, insbesondere natürlichen Bergkristall, z. B. zur Energetisierung/Vitalisierung.

Der zweite Filter ist dieser/diesen Filterstufe(n) bevorzugt vorgelagert, besonders bevorzugt bildet er die erste Stufe der Filterkartusche. Bereits die Reinigung kann die nachfolgende Gas-Anreicherung verbessern helfen, etwa weil dann mehr freie Wasserstoffbrückenbindungen zur Verfügung stehen. Auch das Binden von z. B. Kalk durch das Korallenmaterial kann in dieser Hinsicht von Vorteil sein, zudem kann die Anreicherung auch durch die vorherige Mineralisierung verbessert werden. Bevorzugt weist die Filterkartusche alle vorstehend aufgeführten Stufen auf, besonders bevorzugt werden diese in der Reihenfolge der Nennung durchströmt.

Der Einlass ist erfindungsgemäß an oder in einem reversibel herausnehm- und wiedereinsetzbaren Wassertank ausgebildet, der bspw. ein Fassungsvolumen von mindestens 0,5 Liter bzw. 0,7 Liter haben kann. Auch mit Blick auf die Auslegung als Haushaltsgerät können Obergrenzen bspw. bei höchstens 2 Liter, 1,5 Liter bzw. 1 Liter liegen. In der Anwendung wird der Wassertank zum Befüllen herausgenommen und dann im befüllten Zustand wiedereingesetzt. Die Wasserentnahme erfolgt bevorzugt über die Unterseite, dort kann bspw. ein selbstschließendes Ventil angeordnet sein, das z. B. beim Einsetzen in das Gerät mechanisch oder auch durch entsprechende Ansteuerung geöffnet wird.

Der Wassertank ist bevorzugt mit einem abnehmbaren Deckel ausgestattet, an seiner Unterseite ist vorzugsweise eine Standfläche ausgebildet. Damit kann der befüllte Wassertank abgestellt werden, besonders vorteilhaft lässt er sich zum Kühlen des Wassers in einen Kühlschrank stellen. Eine solche Lagerung könnte zwar prinzipiell hinsichtlich eines Keimeintrags problematisch sein, bei dem vorliegenden Gerät durchläuft das Wasser die Gas-Anreicherung, und damit auch die vor- und nachgelagerte Filtration, jedoch erst nach der Lagerung.

In bevorzugter Ausgestaltung ist der erste Filter, insbesondere eine Filterkartusche, in dem Wassertank angeordnet. In anderen Worten sitzt der befilterte Einlass im Wassertank, wäre also eine etwaige Keimbildung auf diesen beschränkt. Der Wassertank lässt sich vergleichsweise gut entnehmen und reinigen, bevorzugt ist er spülmaschinenfest ausgestaltet.

Bevorzugt ist die Filterkartusche reversibel herausnehm- und wiedereinsetzbar im Wassertank angeordnet, besonders bevorzugt von oben in eine Öffnung im Boden eingesteckt. Die Filterkartusche kann Teil einer Filtereinheit sein, die sich im eingesetzten Zustand bspw. mindestens bis zur halben Höhe, vorzugsweise mindestens 0,7-fachen Höhe, des Wassertanks erstreckt, was das Herausnehmen vereinfachen und ein Hantieren innerhalb des Wassertanks und damit einen etwaigen Keimeintrag reduzieren kann. Bevorzugt weist die im Wassertank angeordnete Filtereinheit eine der Filterkartusche vorgelagerte Filterebene auf, vorzugsweise ein Edelstahlgitter, bspw. mit einer Porengröße von höchstens 50 µm, 20 µm bzw. 15 µm (mit einer möglichen Untergrenze bei bspw. mindestens 5 µm).

Vorteilhaft kann auch eine Filtereinheit sein, die eine öffenbare Kammer aufweist, bevorzugt der Filterkartusche vorgelagert. In die Kammer kann, z. B. für einen Reinigungsmodus des Geräts, eine Reinigungstablette eingelegt werden und/oder kann eine Tablette zum Aufbereiten des eigentlichen Trinkwassers gegeben werden, bspw. eine Geschmackstablette. Aufgrund der Anordnung vor der Filterkartusche und damit außerhalb des durch die Befilterung geschützten Innenbereichs, ist dies sowohl für das Gerät an sich als auch für den Nutzer ohne hygienische Einschränkungen möglich (anders als bspw. bei einer Aromatisierung auslassseitig).

Gemäß einer bevorzugten Ausführungsform ist parallel zu dem Pfad durch die Anreicherungseinheit eine Bypass-Leitung vorgesehen, durch welche Wasser an der Anreicherungseinheit vorbei vom Ein- zum Auslass geführt werden kann. Wird bspw. gleichzeitig ein Teil des über den Einlass geführten Wassers durch die Bypass-Leitung und ein anderer Teil davon durch die Anreicherungseinheit geführt, kann das danach in Mischung resultierende Wasser dann z. B. einen mittleren Anreicherungsgrad haben. Damit lässt sich die Anreicherungseinheit z. B. mit einer im Wesentlichen konstanten Fördermenge betreiben bzw. kann der Durchfluss auf einen optimalen Betrieb der Anreicherungseinheit eingestellt sein.

In bevorzugter Ausgestaltung ist das Gerät dazu eingerichtet, auf eine entsprechende Nutzerbetätigung hin Wasser in unterschiedlichen Anreicherungsstufen auszugeben. Dabei ist im Allgemeinen auch eine stufenlose Auswahl denkbar, bevorzugt sind jedoch verschiedene Stufen vordefiniert (oder in einem Konfigurationsmodus der Steuereinheit vordefinierbar). Eine Stufe kann bspw. maximal angereichertes Wasser sein, wobei dann bspw. das gesamte Wasser durch die Anreicherungseinheit geführt wird und die Bypass-Leitung außer Betrieb bleibt. Bei einer mittleren Anreicherungsstufe kann, wie im vorstehenden Absatz geschildert, gleichzeitig Wasser durch die Anreicherungseinheit und durch die Bypass-Leitung geführt werden. Eine weitere Stufe kann stilles Wasser sein, wobei dann die Anreicherungseinheit außer Betrieb bleibt und das gesamte Wasser durch die Bypass-Leitung geführt wird.

Generell weist das Gerät bevorzugt eine Zuführpumpe auf, mittels welcher das Wasser von dem Einlass, bspw. aus dem Wassertank, durchs Innere zum Auslass geführt wird. Damit müssen, anders als bspw. bei einem Anschluss direkt an die Wasserleitung und damit städtische Wasserversorgung, z. B. weniger oder keine Druckschwankungen berücksichtigt werden, was einen stabilen Betrieb und auch kompakten Aufbau (keine Überdimensionierung) ermöglichen kann. Auch vor diesem Hintergrund hat die Zuführpumpe in bevorzugter Ausgestaltung eine konstante Leistung, bspw. von höchstens 150 W, 120 W, 100 W bzw. 80 W (mit möglichen Untergrenzen bei mindestens 40 W bzw. 50 W). Die Auslegung auf eine konstante Fördermenge kann auch ökonomisch von Vorteil sein, wobei z. B. in Kombination mit der Bypass-Leitung gleichwohl unterschiedliche Anreicherungsstufen realisiert werden können.

Die Anreicherungseinheit weist in bevorzugter Ausgestaltung eine Durchströmungskammer und dieser nachgelagert eine Misch- und Beruhigungskammer auf. Die Durchströmungskammer wird von dem Wasser durchströmt, bspw. im Wesentlichen laminar. Dabei wird diesem Wasserstrom in der Durchströmungskammer das Gas zugeführt, bevorzugt am Außenumfang der Strömung. Es wird also gewissermaßen ein Gasmantel um das strömende Wasser gelegt und dabei von diesem auch mitgenommen. Dabei kann die Strömung an sich hinsichtlich der Gaszufuhr vorteilhaft sein, kann das Gas nämlich bildlich gesprochen wie bei einer Wasserstrahlpumpe an den Strom gesaugt werden (Venturiprinzip). Damit muss das Gas im Verhältnis zum Wasser mit nicht allzu großem Überdruck zugeführt werden, der Gasdruck kann bspw. maximal 6 Bar betragen (und der Wasserdruck z. B. bei rund 5 Bar liegen). Der begrenzte Druck ist, speziell in Anbetracht des Anwendungsumfelds "Haushaltsgerät", z. B. in Sicherheitshinsicht und auch den kompakten Aufbau betreffend von Vorteil.

Zum Zuführen des Gases ist die Durchströmungskammer bevorzugt in eine Anreicherungskammer eingebettet, bilden die Durchströmungs- und die Anreicherungskammer also gewissermaßen ein Doppelwandsystem. Die äußere Wand definiert die Anreicherungskammer, und die innere Wand grenzt die Durchströmungs- und die Anreicherungskammer voneinander ab. Der Gaseintrag in die Durchströmungskammer kann dann über eine oder mehrere, bspw. umlaufend verteilt angeordnete, Öffnungen in der inneren Wand erfolgen.

In der Durchströmungskammer muss dabei noch keine bzw. keine wesentliche Durchmischung erfolgen, zu diesem Zweck wird der Fluidstrom (aus Wasser und Gas) in die Misch- und Beruhigungskammer geführt. In bevorzugter Ausgestaltung ist dazwischen eine Trennplatte angeordnet, in der eine die Kammern fluidisch verbindende Öffnung mit im Verhältnis kleinen Querschnitt vorgesehen ist, bevorzugt sind eine Mehr- bzw. Vielzahl solcher Öffnungen vorgesehen (die Öffnungsquerschnitte können bspw. im Bereich einiger 10 µm liegen und damit deutlich kleiner als der Strömungsquerschnitt in der Durchströmungskammer sein). Der mit der Trennplatte realisierte Durchmessersprung kann einerseits zu einer Verwirbelung der laminaren Strömung, insbesondere aber auch zu einem Druckabfall führen. Infolgedessen kann das Wasser sogar in die Gasphase übergehen, was bspw. aufgrund der freien Bindungen einen besonders effizienten Gaseintrag ermöglichen kann. Bezogen auf die Orientierung des aufgestellten Geräts ist bzw. sind die Öffnungen bevorzugt oben angeordnet, zum Boden der Kammer hin kann sich das Wasser beruhigen bzw. kondensieren und dann dort entnommen werden.

Die Misch- und Beruhigungskammer hat in bevorzugter Ausgestaltung ein Volumen von höchstens 200 ml, weiter und besonders bevorzugt höchstens 150 ml bzw. 100 ml (mögliche Untergrenzen können bspw. bei 50 ml bzw. 70 ml liegen). Damit wird zwischen zwei Bezügen die etwaige im Gerät stehende Wassermenge entsprechend begrenzt, vgl. die Anmerkungen eingangs.

Die Durchströmungs- und/oder die Misch-/Beruhigungskammer, sowie ggf. auch die Anreicherungskammer (siehe vorne), sind vorzugsweise als Kunststoffspritzgussteile vorgesehen. Bevorzugt werden sie zueinander mehrteilig, als gesonderte Teile gespritzt und dann zusammengesetzt. Dabei können zwischen den Einzelteilen bspw. Dichtungen angeordnet sein und können die Einzelteile von einer äußeren Hüllstruktur, etwa einer Klammer, zusammengedrückt werden. Bevorzugt werden die Einzelteile jedoch fügeverbunden, insbesondere miteinander verklebt, bspw. mit einem lebensmittelechten Klebstoff. Unabhängig von diesen Details kann als Kunststoff bevorzugt ein Polyamid vorgesehen sein, bspw. kommerziell unter dem Handelsnamen Grilamid verfügbar. Hier kann ein Vorteil in der besonders geringen Oberflächenrauhigkeit liegen, was wiederum einer Keimanlagerung vorbeugen kann.

Ist das Gerät aufgestellt, wird die Anreicherungseinheit bevorzugt von oben nach unten durchströmt, ist also bspw. die Misch- und Beruhigungskammer unterhalb der Durchströmungskammer angeordnet. Das Wasser wird bevorzugt unten aus der Misch- und Beruhigungskammer entnommen, bezogen auf das Gerät insgesamt also an einer Position relativ weit unten. Der Auslass ist aus ergonomischen Gründen bevorzugt in der oberen Hälfte des Geräts angeordnet, insbesondere an dessen Oberseite. Dementsprechend wird das angereicherte Wasser dann in bevorzugter Ausgestaltung über eine Verbindungsleitung nach oben zu dem zweiten Filter geführt, wobei die Verbindungsleitung ein vergleichsweise kleines Volumen haben kann (kaum Totvolumen), bspw. von höchstens 30 ml bzw. 20 ml.

Die Erfindung betrifft auch die Verwendung eines vorliegend offenbarten Geräts zum Ausgeben von angereichertem Trinkwasser, insbesondere in einem Privathaushalt. Bevorzugt wird das Wasser dabei auf eine entsprechende Nutzerwahl hin in unterschiedlichen Anreicherungsstufen ausgegeben, wobei besonders bevorzugt verschiedene Stufen vordefiniert sind, bspw. "still", "medium" und "spritzig".

Unabhängig vom Anreicherungsgrad erfolgt die Nutzerbetätigung bevorzugt über einen Taster, wird das Wasser also kontinuierlich ausgegeben, solange der Nutzer diesen betätigt (und bspw. der Wassertank noch hinreichend gefüllt ist). Dazu kann das Gerät mit einem Tastschalter ausgestattet sein, die Tasterfunktion kann aber bspw. auch in Verbindung mit einem Touch-Display in dessen Auswerte- bzw. der Steuereinheit des Geräts hinterlegt sein.

In bevorzugter Ausgestaltung wird der erste und/oder der zweite Filter in regelmäßigen Abständen getauscht, vgl. auch die vorstehenden Anmerkungen. Bevorzugt werden sie in den gleichen Abständen getauscht, was bspw. Bedienfehlern oder einer Kreuzkontamination vorbeugen kann. Besonders bevorzugt werden der erste und zweite Filter als Set zur Verfügung gestellt, also bspw. in einer gemeinsamen Umverpackung. Das Gerät kann dem Nutzer einen vorzunehmenden Filtertausch anzeigen, bspw. über die Anzahl der noch verbleibenden Bezüge oder die verbleibende Bezugsmenge (z. B. in Litern). Dabei kann sich der Abstand zwischen zwei Filtertauschen z. B. nach der Zeit oder der bezogenen Menge richten, es können auch beide Größen kombiniert Eingang finden. Die Anzeige kann am Gerät selbst erfolgen, z. B. optisch über einen Display, alternativ oder zusätzlich kann die Information z. B. auch in einer an das spezifische Gerät gekoppelten App dargestellt werden. Dazu kann das Gerät *smart* sein, also mit einer Sensorik und einer Schnittstelle ausgestattet, wobei Erstere Betriebsdaten erfassen kann (z. B. ausgegebene Wassermenge), die über Letztere ausgegeben werden, etwa direkt an ein verbundenes *handheld device* (Tablet, Smartphone, etc.) oder zunächst über einen Server.

Zu den von einem *smarten* Gerät ausgegebenen Betriebsdaten kann bspw. auch der Gas-, insbesondere CO₂-Verbrauch gehören. Die Inline-Anreicherung, insbesondere in der vorstehend geschilderte Ausgestaltung, kann einen im Verhältnis sehr geringen Gasverbrauch zur Folge haben, was dem Nutzer bspw. angezeigt werden kann, etwa in Relation zu der eingangs geschilderten Anreicherung durch Druckbeaufschlagung eines Behältnisses (bei welcher relativ viel Gas verloren gehen kann). Die Anzeige des Gasverbrauchs kann auch eine positiv bestärkende Wirkung auf das Nutzerverhalten haben, bspw. wenn unterschiedliche Anreicherungsstufen zur Verfügung stehen zu einer bewussteren Wahl des geringeren Anreicherungsgrads führen.

Gemäß einer bevorzugten Ausführungsform wird in eine öffenbare Kammer einer Filtereinheit mit dem ersten Filter/der Filterkartusche ein Reinigungsmittel eingebracht und bspw. über die Steuereinheit ein Reinigungsmodus des Geräts aktiviert. Das Reinigungsmittel kann insbesondere eine Reinigungstablette sein, bspw. Kukident.

Im Folgenden wird die Erfindung anhand eines Ausführungsbeispiels näher erläutert, wobei die einzelnen Merkmale im Rahmen der nebengeordneten Ansprüche auch in anderen Kombinationen erfindungswesentlich sein können und auch weiterhin nicht im Einzelnen zwischen den unterschiedlichen Anspruchskategorien unterschieden wird.

Im Einzelnen zeigt
- Figur 1: in einer schematischen Übersichtsdarstellung ein Gerät zum Ausgeben von in einer Durchlauf-Anreicherungseinheit karbonisiertem Wasser;
- Figur 2: in einer schematischen Detaildarstellung die Durchlauf-Anreicherungseinheit des Geräts gemäß Figur 1;
- Figur 3: das gehäuste Gerät mit seinen Bestandteilen in einer Explosionsdarstellung;
- Figur 4: den Wassertank des Geräts mit darin angeordneter Filterkartusche in einer geschnittenen Seitenansicht.

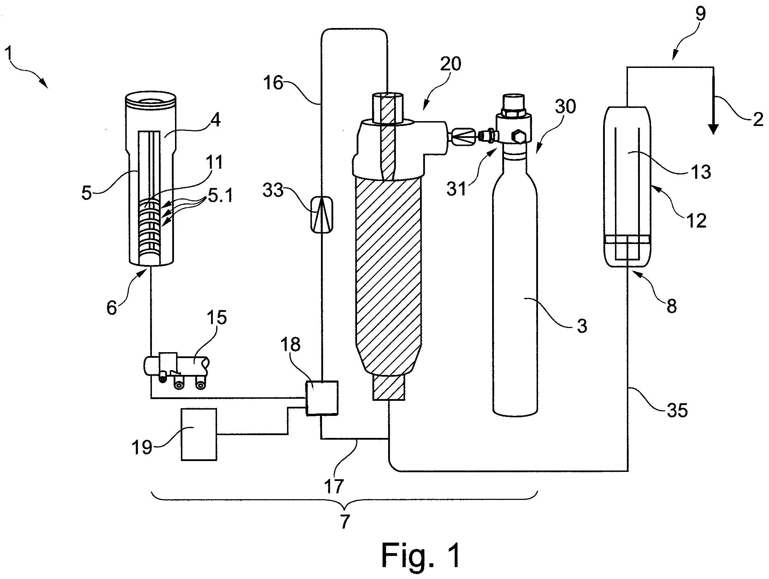

**Figur 1** zeigt ein Gerät 1 zum Ausgeben von Trinkwasser 2, das mit einem Gas 3 angereichert wird, vorliegend CO₂. Das Gerät 1 weist einen Wassertank 4 auf, der zum Befüllen entnommen werden kann. In dem Wassertank 4 ist eine nachstehend weiter im Detail diskutierte Filterkartusche 5 vorgesehen, die insgesamt mehrere Stufen 5.1 aufweist. Eine dieser Stufen 5.1 bildet einen ersten Filter 11 und ist vorliegend mit Aktivkohlegranulat gefüllt. Die Filterkartusche 5 mit dem ersten Filter 11 ist einem Einlass 6 zugeordnet, wird also von dem Wasser am Übergang aus dem Wassertank 4 ins Geräteinnere 7 durchströmt.

Das Gerät 1 weist ferner einen zweiten Filter 12 auf, der einem Auslass 8 zugeordnet ist. Den zweiten Filter 12 durchströmt das Wasser einem Zapfhahn 9 vorgelagert. Er kann einem Keimeintrag in das Geräteinnere 7 über den Auslass 8 bzw. Zapfhahn 9 vorbeugen, was in Verbindung mit der Befilterung des Einlasses 6 das Verkeimungsrisiko insgesamt reduziert. Der zweite Filter 12 weist eine Filtermembran 13 auf und ist vorliegend als Mikromembranfilter mit einer Porengröße von rund 0,15 µm ausgeführt.

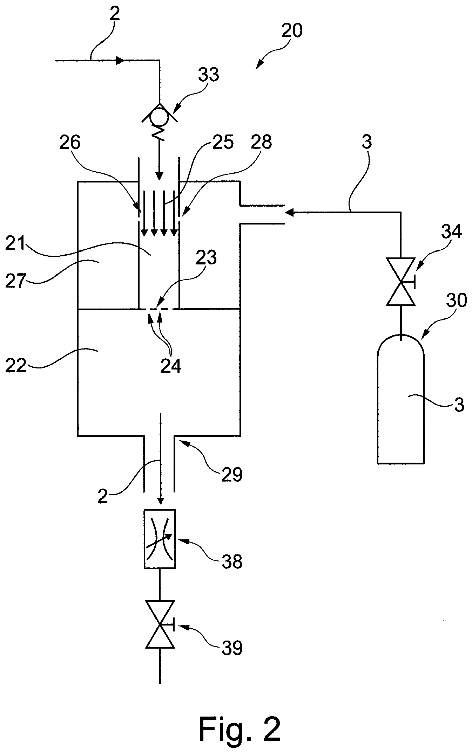

Im Geräteinneren 7 ist eine Durchlauf-Anreicherungseinheit 20 zu erkennen, deren Funktion anhand von Figur 2 weiter im Detail beschrieben wird. Der Durchlauf-Anreicherungseinheit 20 vorgelagert ist eine Zuführpumpe 15 vorgesehen, mit der das Wasser auf eine Nutzerbetätigung hin aus dem Wassertank 4 zu der Durchlauf-Anreicherungseinheit 20 gefördert wird. Dabei gibt es, zusätzlich zu einer Durchströmungsleitung 16, über die das Wasser durch die Durchlauf-Anreicherungseinheit 20 geführt werden kann, eine Bypass-Leitung 17, über die Wasser an der Durchlauf-Anreicherungseinheit 20 vorbeigeführt werden kann. Die anteilige Aufteilung kann an einem Zweiwegeventil 18 erfolgen, das von einer Steuereinheit 19 des Geräts 1 angesteuert wird.

In Abhängigkeit von dem gewünschten Anreicherungsgrad kann der Anteil des durch die Bypass-Leitung 17 und damit an der Anreicherungseinheit 20 vorbeigeführten Wassers größer oder kleiner sein, es kann z. B. für die Variante "still" auch das gesamte Wasser oder für die Variante "spritzig" gar kein Wasser durch die Bypass-Leitung 17 geführt werden. Das angereicherte Wasser wird unten an der Anreicherungseinheit 20 entnommen und über eine Verbindungsleitung 35 nach oben geführt. Entsprechend sind der zweite Filter 12 und der Zapfhahn 9 oben am Gerät 1 angeordnet.

Mit der Anreicherungseinheit 20 ist ein Behältnis 30 gekoppelt, in dem das Gas 3 vorgehalten wird. Das Behältnis 30 ist als Flasche ausgeführt und in eine Aufnahme 31 eingesetzt. Im vorliegenden Beispiel ist das Behältnis 30 eingeschraubt und kann, wenn das Gas 3 aufgebraucht ist, herausgenommen und durch eine gefüllte Flasche ersetzt werden.

**Figur 2** zeigt die Anreicherungseinheit 20 in einer schematischen Detaildarstellung. Das Wasser 2 wird der Anreicherungseinheit 20 über ein Rückschlagventil 33 zugeführt und gelangt dann zunächst in eine Durchströmungskammer 21, dieser nachgelagert ist eine Misch- und Beruhigungskammer 22 vorgesehen. Zwischen den beiden Kammern ist eine Trennplatte 23 angeordnet, die von einer Vielzahl Öffnungen 24 (Mikroöffnungen) durchsetzt wird. Die Durchströmungskammer 21 wird von dem zugeführten Wasser 2 im Wesentlichen laminar durchströmt, wobei das Gas 3 dieser Strömung 25 am Außenumfang 26 zugeführt wird. Dazu ist die Durchströmungskammer 21 in eine Anreicherungskammer 27 eingebettet, wobei die beiden über Öffnungen 28 miteinander verbunden sind.

Die Anreicherungskammer 27 wird mit dem Gas 3 beaufschlagt, und zwar mit im Verhältnis etwas Überdruck zum Wasser (bspw. von rund einem Bar). Dadurch legt sich das Gas 3 mantelförmig um die Strömung 25, wobei mit dem Auftreffen auf die Trennplatte 23 bzw. dem Eintritt in die Misch- und Beruhigungskammer 22 eine Durchmischung erfolgt. Es kommt zu einer Verwirbelung der zuvor laminaren Strömung, und das Wasser kann aufgrund des aus dem Durchmessersprung resultierenden Druckabfalls in die Gasphase übergehen. Damit ist eine besonders effiziente Anlagerung der Wassermoleküle an das Gas möglich, das am Boden der Misch- und Beruhigungskammer 22 kondensierende Wasser ist mit dem Gas angereichert, vorliegend karbonisiert.

Über einen Auslass 29 am Boden der Misch- und Beruhigungskammer 22 wird das Wasser 2 abgeführt. Über einen Durchflussmengenregler 38 und ein Zapfventil 39 gelangt es schließlich zum zweiten Filter 12 (hier nicht dargestellt) und Zapfhahn 9 (ebenfalls nicht dargestellt). Auch das Behältnis 30 ist über ein Ventil 34 angeschlossen, über welches der Gasdruck in der Anreicherungskammer 27 eingestellt wird.

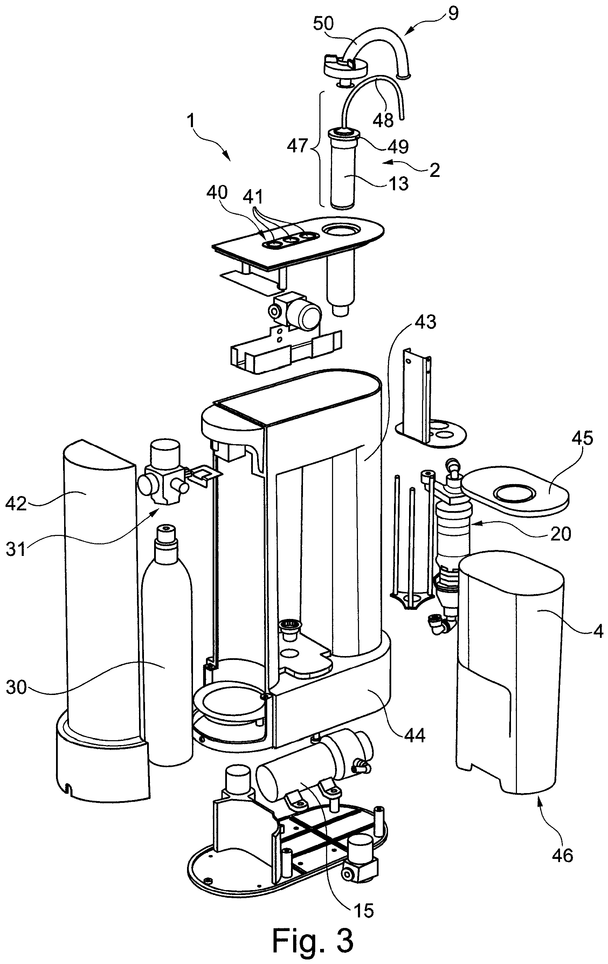

**Figur 3** zeigt das Gerät 1 in einer Explosionsdarstellung. Die Blickrichtung ist dabei leicht schräg von hinten oben, wobei der Zapfhahn 9 vorne oben angeordnet ist. Oberseitig ist ferner ein Bedienfeld 40 mit vorliegend drei Tasten 41 zu erkennen, über die Wasser mit unterschiedlichem Anreicherungsgrad angefordert werden kann. Rückseitig ist die Aufnahme 31 vorgesehen und wird das Behältnis 30 eingesetzt, es ist dann durch eine formschlüssig gehaltene Blende 42 verdeckt. In einem vorderen Gehäuseteil 43 ist die Anreicherungseinheit 20 untergebracht, die Zuführpumpe 15 sitzt in einem Bodenteil 44. Der Wassertank 4 ist zwischen der durch Abnehmen der Blende 42 öffenbaren Kammer mit dem Behältnis 30 und dem vorderen Gehäuseteil 43 mit der Anreicherungseinheit 20 angeordnet. Er kann seitlich entnommen werden, in der vorliegenden Darstellung schräg nach rechts unten. Der Wassertank 4 ist mit einem Deckel 45 ausgestattet, der zum Befüllen und auch Reinigen abgenommen werden kann. Unterseitig weist der Wassertank 4 eine Standfläche 46 auf, er lässt sich damit auf einer ebenen Fläche abstellen und insbesondere zu Kühlzwecken in einen Kühlschrank geben.

Der zweite Filter 12, also die Filtermembran 13, ist Teil einer Filtereinheit 47. Diese umfasst ferner einen Auslassschlauch 48 und ein Gehäuseteil 49, über das der Auslassschlauch 48 mit der Filtermembran 13 verbunden ist. Die Filtereinheit 47 wird im Gesamten getauscht, also samt Auslassschlauch 48. Dieser wird dabei in einem Rohrstutzen 50 platziert, der sich mit einer Krümmung und dann nach unten erstreckt und Teil des Zapfhahns 9 ist. Aufgrund der Krümmung ist der Rohrstutzen für eine Reinigung schwer zugänglich, deshalb wird der Auslassschlauch 48 im Rohrstutzen 50 angeordnet (und regelmäßig ausgetauscht).

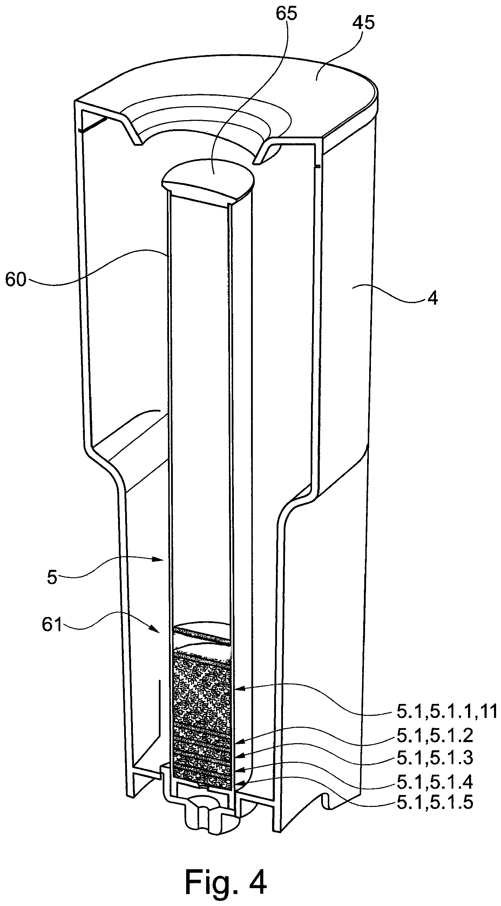

**Figur 4** zeigt den Wassertrank 4 in einer geschnittenen Schrägansicht. Die Filterkartusche 5 ist als Teil einer langgestreckten Filtereinheit 60 vorgesehen, kann also ohne größeres Hantieren innerhalb des Wassertanks 4 entnommen werden. Der ersten Filterstufe 5.1, also dem ersten Filter 11 (Aktivkohlegranulat) vorgelagert ist eine öffenbare Kammer 61 vorgesehen, in die eine Reinigungs- oder Geschmackstablette gegeben werden kann. Bevorzugt lässt sich dazu ein oberseitiger Deckel 65 abnehmen, ist die Kammer 61 also ohne Herausnehmen der Filtereinheit 60 aus dem Wassertank 4 zugänglich.

Der ersten Filterstufe 5.1.1 mit dem Aktivkohlegranulat nachgelagert gibt es weitere Filterstufen 5.1, nämlich vorliegend
- eine zweite Filterstufe 5.1.2, die mit gereinigtem Sand gefüllt ist;
- eine dritte Filterstufe 5.1.3, die mit einem Seekorallengranulat gefüllt ist;
- eine vierte Filterstufe 5.1.4, die der Ergänzung mit natürlichen Mineralien dient;
- eine fünfte Filterstufe 5.1.5, die mit Rosenquarz gefüllt ist.

**Bezugszeichenliste**

| | |
|---|---|
| Haushaltsgerät ("Gerät") | 1 |
| Trinkwasser | 2 |
| Gas | 3 |
| Wassertank | 4 |
| Filterkartusche | 5 |
| Mehrere Stufen | 5.1 |
| Erste Filterstufe mit Aktivkohlegranulat | 5.1.1 |
| Zweite Filterstufe mit gereinigtem Sand | 5.1.2 |
| Dritte Filterstufe mit Seekorallengranulat | 5.1.3 |
| Vierte Filterstufe zur Ergänzung mit natürlichen Mineralien | 5.1.4 |
| Fünfte Filterstufe mit Rosenquarz | 5.1.5 |
| Einlass | 6 |
| Geräteinneres | 7 |
| Auslass | 8 |
| Zapfhahn | 9 |
| Erster Filter | 11 |
| Zweiter Filter | 12 |
| Filtermembran | 13 |
| Zuführpumpe | 15 |
| Durchströmungsleitung | 16 |
| Bypass-Leitung | 17 |
| Zweiwegeventil | 18 |
| Steuereinheit | 19 |
| Durchlauf-Anreicherungseinheit | 20 |
| Durchströmungskammer | 21 |
| Misch- und Beruhigungskammer | 22 |
| Trennplatte | 23 |
| Öffnungen | 24 |
| Trinkwasserströmung | 25 |
| Außenumfang | 26 |
| Anreicherungskammer | 27 |
| Öffnungen | 28 |
| Auslass (der Misch- und Beruhigungskammer) | 29 |
| Behältnis | 30 |
| Aufnahme | 31 |
| Rückschlagventil | 33 |
| Ventil | 34 |
| Verbindungsleitung | 35 |
| Durchflussmengenregler | 38 |
| Zapfventil | 39 |
| Bedienfeld | 40 |
| Tasten | 41 |
| Blende | 42 |
| Vorderes Gehäuseteil | 43 |
| Bodenteil | 44 |
| Deckel | 45 |
| Standfläche | 46 |
| Filtereinheit | 47 |
| Auslassschlauch | 48 |
| Gehäuseteil | 49 |
| Rohrstutzen | 50 |
| Filtereinheit (mit Filterkartusche) | 60 |
| Offenbare Kammer | 61 |
| Deckel (zum Öffnen der Kammer) | 65 |

## Patentansprüche

1. Haushaltsgerät (1) zum Ausgeben von mit einem Gas (3) angereicherten Trinkwasser (2), mit
einem Auslass (8), über den das angereicherte Trinkwasser (2) gezapft werden kann,
einer dem Auslass (8) vorgelagerten Durchlauf-Anreicherungseinheit (20) zum Anreichern des Trinkwassers (2) mit dem Gas (3),
einer Aufnahme (31) für ein Behältnis (30) mit dem Gas (3),
einem der Durchlauf-Anreicherungseinheit (20) vorgelagerten Einlass (6), über den das Trinkwasser (2) der Durchlauf-Anreicherungseinheit (20) zugeführt werden kann,
wobei der Einlass (6) mit einem ersten Filter (11) zum Filtern des Trinkwassers (2) ausgestattet ist,
**dadurch gekennzeichnet, dass** zusätzlich der Auslass (8) mit einem zweiten Filter (12) zum Filtern des angereicherten Trinkwassers (2) ausgestattet ist, wobei ferner der Einlass (6) an oder in einem reversibel herausnehm- und wiedereinsetzbaren Wassertank (4) ausgebildet ist.

2. Haushaltsgerät (1) nach Anspruch 1, bei welchem der zweite Filter (12) Teil einer im Gesamten austauschbaren Filtereinheit (47) ist, wobei die Filtereinheit (47) auch einen Auslassschlauch (48) aufweist, über den das Trinkwasser (2) dem zweiten Filter (12) nachgelagert ausgegeben werden kann.

3. Haushaltsgerät (1) nach Anspruch 2, bei welchem der Auslassschlauch (48) in einem mit dem Gerät (1) verbauten Rohrstutzen (50) angeordnet ist.

4. Haushaltsgerät (1) nach einem der vorstehenden Ansprüche, bei welchem der erste Filter (11) als Stufe (5.1, 5.1.1) einer insgesamt mehrstufigen Filterkartusche (5) vorgesehen ist.

5. Haushaltsgerät (1) nach Anspruch 4, bei welchem die Filterkartusche (5) in dem Wassertank (4) angeordnet ist.

6. Haushaltsgerät (1) nach einem der vorstehenden Ansprüche, mit einer Bypass-Leitung (17), die in Parallelschaltung zu der Durchlauf-Anreicherungseinheit (20) den Einlass (6) mit dem Auslass (8) verbindet.

7. Haushaltsgerät (1) nach Anspruch 6 mit einer Steuereinheit (19), die dazu eingerichtet ist, in Abhängigkeit von einem nutzerseitig gewünschten Anreicherungsgrad anteilig unterschiedlich viel Wasser durch die Bypass-Leitung (17) und durch die Durchlauf-Anreicherungseinheit (20) zu führen.

8. Haushaltsgerät (1) nach einem der vorstehenden Ansprüche, bei welchem eine Zuführpumpe (15), mittels welcher das Trinkwasser (2) der Durchlauf-Anreicherungseinheit (20) von dem Einlass (6) zuführbar ist, eine konstante Leistung hat.

9. Haushaltsgerät (1) nach einem der vorstehenden Ansprüche, bei welchem die Durchlauf-Anreicherungseinheit (20) eine Durchströmungskammer (21) und eine nachgelagerte Misch- und Beruhigungskammer (22) aufweist und dazu eingerichtet ist, die Durchströmungskammer (21) mit einer Trinkwasserströmung (25) zu durchströmen und der Trinkwasserströmung (25) dabei eine Strömung des Gases (3) zuzuführen, wobei eine daraus resultierende Fluidströmung in der Misch- und Beruhigungskammer (22) durchmischt wird.

10. Haushaltsgerät (1) nach Anspruch 9, bei welchem die Misch- und Beruhigungskammer (22) ein Volumen von höchstens 200 ml hat.

11. Haushaltsgerät (1) nach Anspruch 9 oder 10, bei welchem die Durchströmungs- (21) und/oder die Misch- und Beruhigungskammer (22) ein Kunststoffspritzgussteil ist.

12. Haushaltsgerät (1) nach einem der Ansprüche 9 bis 11, bei welchem, bezogen auf eine Orientierung des aufgestellten Geräts (1), die Durchströmungskammer (21) oberhalb der Misch- und Beruhigungskammer (22) angeordnet ist und das mit dem Gas (3) angereicherte Trinkwasser (2) unten an der Misch- und Beruhigungskammer (22) abgeführt wird.

13. Haushaltsgerät (1) nach Anspruch 12, bei welchem der zweite Filter (12), bezogen auf eine Orientierung des aufgestellten Geräts (1), in einer oberen Hälfte des Geräts (1) angeordnet ist und das mit dem Gas (3) angereicherte Trinkwasser (2) von der Misch- und Beruhigungskammer (22) über eine Verbindungsleitung (35) nach oben zu dem zweiten Filter (12) geführt wird.

14. Verwendung eines Haushaltsgeräts (1) nach einem der vorstehenden Ansprüche zum Ausgeben von angereichertem Trinkwasser (2), insbesondere in einem Privathaushalt.

15. Verwendung nach Anspruch 14 eines Haushaltsgeräts (1) nach Anspruch 5, bei welcher die Filterkartusche (5) Teil einer Filtereinheit (60) ist, die eine öffenbare Kammer (61) aufweist, wobei in einem Reinigungsmodus ein Reinigungsmittel in die Kammer (61) eingebracht wird.

## Claims

1. Household appliance (1) for dispensing drinking water (2) enriched with a gas (3), with
an outlet (8) through which the enriched drinking water (2) can be tapped,
a flow-through enrichment unit (20) upstream of the outlet (8) for enriching the drinking water (2) with the gas (3),
a receptacle (31) for a container (30) with the gas (3),
an inlet (6) upstream of the flow-through enrichment unit (20), via which the drinking water (2) can be fed to the flow-through enrichment unit (20),
wherein the inlet (6) is equipped with a first filter (11) for filtering the drinking water (2),
**characterised in that** the outlet (8) is additionally equipped with a second filter (12) for filtering the enriched drinking water (2),
wherein the inlet (6) is formed on or in a reversibly removable and reinsertable water tank (4).

2. Household appliance (1) according to claim 1, wherein the second filter (12) is part of a filter unit (47) which can be replaced as a whole, the filter unit (47) also having an outlet hose (48) via which the drinking water (2) can be discharged downstream of the second filter (12).

3. Household appliance (1) according to claim 2, wherein the outlet hose (48) is arranged in a pipe socket (50) installed with the appliance (1).

4. Household appliance (1) according to one of the preceding claims, wherein the first filter (11) is provided as a stage (5.1, 5.1.1) of an overall multi-stage filter cartridge (5).

5. Household appliance (1) according to claim 4, wherein the filter cartridge (5) is arranged in the water tank (4).

6. Household appliance (1) according to one of the preceding claims, with a bypass line (17) which connects the inlet (6) to the outlet (8) in parallel with the flow-through enrichment unit (20).

7. Household appliance (1) according to claim 6 with a control unit (19) which is set up to feed different amounts of water proportionally through the bypass line (17) and through the feed-through enrichment unit (20) depending on a degree of enrichment desired by the user.

8. Household appliance (1) according to one of the preceding claims, wherein a feed pump (15), by means of which the drinking water (2) can be fed to the flow-through enrichment unit (20) from the inlet (6), has a constant output performance.

9. Household appliance (1) according to one of the preceding claims, wherein the flow-through enrichment unit (20) has a flow-through chamber (21) and a downstream mixing and calming chamber (22) and is configured to flow a drinking water flow (25) through the flow-through chamber (21) and to supply a flow of the gas (3) to the drinking water flow (25), wherein a resulting fluid flow is mixed in the mixing and calming chamber (22).

10. Household appliance (1) according to claim 9, wherein the mixing and calming chamber (22) has a volume of at most 200 ml.

11. Household appliance (1) according to claim 9 or 10, wherein the flow-through chamber (21) and/or the mixing and calming chamber (22) is a plastic injection-moulded part.

12. Household appliance (1) according to one of claims 9 to 11, wherein, based on an orientation of the installed appliance (1), the flow chamber (21) is arranged above the mixing and calming chamber (22) and the drinking water (2) enriched with the gas (3) is discharged at the bottom of the mixing and calming chamber (22).

13. Household appliance (1) according to claim 12, wherein the second filter (12) is arranged in an upper half of the appliance (1), relative to an orientation of the installed appliance (1), and the drinking water (2) enriched with the gas (3) is guided upwards from the mixing and calming chamber (22) to the second filter (12) via a connecting line (35).

14. Use of a household appliance (1) according to one of the preceding claims for dispensing enriched drinking water (2), in particular in a private household.

15. Use according to claim 14 of a household appliance (1) according to claim 5, wherein the filter cartridge (5) is part of a filter unit (60) which has an openable chamber (61), wherein a cleaning agent is introduced into the chamber (61) in a cleaning mode.

## Revendications

1. Appareil ménager (1) permettant de distribuer de l'eau potable (2) additionnée d'un gaz (3), comportant :
une sortie (8) permettant le prélèvement de l'eau potable (2) ainsi additionnée de gaz,
une unité d'addition instantanée (20) en amont de la sortie (8) destinée à additionner l'eau potable (2) d'un gaz (3),
un réceptacle (31) pour un conteneur (30) de gaz (3),
une entrée (6) en amont de l'unité d'addition instantanée (20) permettant l'apport de l'eau potable (2) à l'unité d'addition instantanée (20) ;
ladite entrée (6) étant dotée d'un premier filtre (11) destiné à filtrer l'eau potable (2),
**caractérisé en ce que** la sortie (8) est en outre dotée d'un deuxième filtre (12) destiné à filtrer l'eau potable (2) additionnée de gaz,
ladite entrée (6) étant également formée sur ou dans un réservoir d'eau (4) réversiblement démontable et remontable.

2. Appareil ménager (1) selon la revendication 1, dans lequel le deuxième filtre (12) fait partie d'une unité filtrante (47) remplaçable dans sa totalité, ladite unité filtrante (47) présentant également un tuyau de sortie (48) permettant une distribution de l'eau potable (2) en aval du deuxième filtre (12).

3. Appareil ménager (1) selon la revendication 2, dans lequel le tuyau de sortie (48) est agencé dans une tubulure (50) montée sur le dispositif (1).

4. Appareil ménager (1) selon l'une des revendications précédentes, dans lequel le premier filtre (11) constitue un étage (5.1, 5.1.1) d'une cartouche filtrante (5) globalement multi-étage.

5. Appareil ménager (1) selon la revendication 4, dans lequel la cartouche filtrante (5) est agencée dans le réservoir d'eau (4).

6. Appareil ménager (1) selon l'une des revendications précédentes, comportant une ligne de dérivation (17) qui relie l'entrée (6) à la sortie (8) en parallèle avec l'unité d'addition instantanée (20).

7. Appareil ménager (1) selon la revendication 6, comportant une unité de commande (19) conçue pour faire passer une quantité d'eau différente à travers la conduite de dérivation (17) et à travers l'unité d'addition instantanée (20) en fonction du niveau d'addition souhaité par l'utilisateur.

8. Appareil ménager (1) selon l'une des revendications précédentes, dans lequel une pompe d'alimentation (15) au moyen de laquelle l'eau potable (2) peut être apportée, depuis l'entrée (6), à l'unité d'addition instantanée (20), a une puissance constante.

9. Appareil ménager (1) selon l'une des revendications précédentes, dans lequel l'unité d'addition instantanée (20) présente une chambre de circulation (21) et une chambre de mélange et de repos (22) aval et est conçue pour permettre le passage d'un flux d'eau potable (25) dans la chambre de circulation (21) et l'apport à ce flux d'eau potable (25) d'un flux de gaz (3), un flux de fluide ainsi produit étant mélangé dans la chambre de mélange et de repos (22).

10. Appareil ménager (1) selon la revendication 9, dans lequel la chambre de mélange et de repos (22) a une capacité ne dépassant pas 200 ml.

11. Appareil ménager (1) selon la revendication 9 ou 10, dans lequel la chambre de circulation (21) et/ou la chambre de mélange et de repos (22) consiste en une pièce en plastique moulé par injection.

12. Appareil ménager (1) selon l'une des revendications 9 à 11, dans lequel, eu égard à l'orientation de l'appareil (1) installé, la chambre de circulation (21) est agencée au-dessus de la chambre de mélange et de repos (22), et l'eau potable (2) additionnée de gaz (3) est extraite par le fond de la chambre de mélange et de repos (22).

13. Appareil ménager (1) selon la revendication 12, dans lequel le deuxième filtre (12), eu égard a l'orientation de l'appareil (1) installé, est agencé dans une moitié supérieure de l'appareil (1) et l'eau potable (2) additionnée de gaz (3) est amenée à remonter jusqu'au deuxième filtre (12), depuis la chambre de mélange et de repos (22), par une conduite de raccordement (35).

14. Utilisation d'un appareil ménager (1) selon l'une des revendications précédentes pour une distribution d'eau potable (2) additionnée de gaz, notamment dans un foyer privé.

15. Utilisation selon la revendication 14 d'un appareil ménager (1) selon la revendication 5, dans laquelle la cartouche filtrante (5) fait partie d'une unité de filtration (60) qui possède une chambre (61) ouvrable dans laquelle chambre (61) un agent de nettoyage est introduit, en mode de nettoyage.
